## Europäisches Patentamt

## European Patent Office

## Office européen des brevets

(19)

(11) Veröffentlichungsnummer: **0 030 381**
**B1**

(12) # EUROPÄISCHE PATENTSCHRIFT

(45) Veröffentlichungstag der Patentschrift:
**12.06.85**

(21) Anmeldenummer: **80107670.4**

(22) Anmeldetag: **05.12.80**

(51) Int. Cl.⁴: **G 07 C 11/00,** G 07 D 7/00,
G 06 K 19/06

(54) Verfahren und Vorrichtung zur Erzeugung und späteren Kontrolle von gegen Nachahmung, Verfälschung und Missbrauch abgesicherten Dokumenten und Dokument zu dessen Durchführung.

(30) Priorität: **07.12.79 DE 2949351**

(43) Veröffentlichungstag der Anmeldung:
**17.06.81 Patentblatt 81/24**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**EP - A - 0 006 498**
**DE - A - 2 738 113**
**FR - A - 2 246 913**
**FR - A - 2 394 131**
**FR - A - 2 417 141**
**US - A - 3 764 742**
**US - A - 3 806 874**
**US - A - 4 001 550**
**US - A - 4 094 462**

**Conference Record 1978, National telecommunication conf. Vol. 2, p. 24.4.2-4.**

(73) Patentinhaber: **The Grey Lab. Establishment,**
**Kirchstrasse 1, 9490 Vaduz (LI)**

(72) Erfinder: **Scheffel, Kurt, Breslauer Strasse 1,**
**D-7858 Weil am Rhein (DE)**

(74) Vertreter: **Schwan, Gerhard, Dipl.-Ing., Elfenstrasse 32,**
**D-8000 München 83 (DE)**

## Beschreibung

Die Erfindung betrifft ein Verfahren zur Erzeugung und späteren Kontrolle von gegen Nachahmung, Verfälschung und Missbrauch abgesicherten Dokumenten unter Verwendung eines über eine «trap-door» Funktion verbundenen Schlüssel- oder Algorithmuspaares bestehend aus einem geheimhaltungsbedürftigen Schlüssel und einem nichtgeheimhaltungsbedürftigen Schlüssel, bei dem auf dem abzusichernden Dokument bei dessen Erstellung eine unverschlüsselte Klarinformation eingetragen wird, aus der unverschlüsselten Klarinformation unter Verwendung des geheimgehaltenen Schlüssels oder Algorithmus eine verschlüsselte Information abgeleitet wird, die ebenfalls auf dem abzusichernden Dokument eingetragen wird, und bei dem bei der Kontrolle des Dokuments die verschlüsselte Information unter Verwendung des nichtgeheimhaltungsbedürftigen Schlüssels bzw. Algorithmus entschlüsselt, die so gewonnene Information mit der auf dem Dokument befindlichen unverschlüsselten Information verglichen und anhand des Vergleichsergebnisses die Gültigkeit des Dokuments kenntlich gemacht wird. Die Erfindung betrifft des weiteren ein Dokument und eine Vorrichtung zur Durchführung eines solchen Verfahrens.

Ein Verfahren der vorstehend genannten Art ist in der älteren EP-Anmeldung 79 101 809.6 beschrieben. Dabei werden die Klarinformation und die daraus unter Verwendung des geheimgehaltenen Schlüssels oder Algorithmus abgeleitete verschlüsselte Information auf dem Dokument in maschinenlesbarer Form eingetragen. Dieses Verfahren bietet keinen Schutz vor Duplizierung der zu sichernden Dokumente.

Es sind Verfahren und Einrichtungen bekannt (DE-A-2 738 113), die Dokumente oder andere schutzbedürftige Objekte dadurch schützen, dass in das Objekt ein integrierter, möglichst monolitischer Schaltkreis eingebaut wird. Eine wichtige Anwendung findet ein derartig geschütztes Dokument in der Form einer Identifikationskarte, in die ein solcher integrierter Kreis (Chip) eingebaut ist, der über in der Identifikationskarte angebrachte (nicht notwendig galvanische) Kontakte betrieben werden kann. Diese Verfahren und Einrichtungen setzen voraus, dass integrierte Kreise in bestimmter Form nur mit grossem Kostenaufwand herzustellen sind, dass auf einem solchen integrierten Kreis nicht nur Daten gespeichert werden können, sondern auch eine Datenverarbeitung stattfinden kann, dass die während der Verarbeitung ablaufenden Rechenvorgänge auf dem integrierten Kreis im wesentlichen durch dessen Aufbau vorbestimmt sind und dass schliesslich in der integrierten Schaltung Speicherbereiche vorgesehen werden können, deren Inhalt zwar innerhalb der integrierten Schaltung verfügbar ist, aber nicht von ausserhalb des integrierten Kreises, d.h. des zu schützenden Dokumentes, abgelesen werden kann. Solche Identifikationskarten mit eingebauter integrierter Schaltung ermöglichen z.B. die Speicherung von finanziellen Transaktionen in unzerstörbarer, nicht überschreibbarer, aber lesbarer Form. Sie erlauben es aber auch, Personalisierungsdaten, die also die Person des rechtmässigen Inhabers der Identifikationskarte beschreiben, insbesondere Daten, die bei den Transaktionen zur Identifizierung des Benutzers dienen, wie z.B. eine persönliche Identifizierungszahl (PIN), in Speichern der integrierten Schaltung unterzubringen, die ein Herauslesen durch unrechtmässige Benutzer unmöglich machen. Gegenüber einer Absicherung von Information durch Verschlüsselung, bei welcher für jede Transaktion die für die Entschlüsselung notwendigen Algorithmen zur Verfügung stehen müssen, und Verschlüsselungsverfahren, deren Algorithmen weit gestreut an vielen Stellen verfügbar sind und infolgedessen nicht mit Sicherheit geheimgehalten werden können, wird eine erhöhte Zuverlässigkeit der Absicherung erzielt, weil die in den gesicherten Bereichen der integrierten Schaltung eingespeicherten Informationen mit keinem Mittel aus dem zu schützenden Dokument herausgelesen werden können, auch nicht während der innerhalb der integrierten Schaltung durchgeführten Rechenoperationen, bei denen diese gesicherten Informationen verwendet werden.

Bei der bekannten Lösung stellt aber der noch nicht personalisierte Datenträger in unrechten Händen eine grosse Gefahr dar. Es kann nicht ausgeschlossen werden, dass bei der Fabrikation der integrierten Schaltung oder bei der Fabrikation der Identifikationskarten bzw. anderer Dokumente Diebstähle auftreten, die zur Informationsaufnahme bereite Identifikationskarten mit integrierten Schaltungen in falsche Hände fallen lassen. Zwar wird zur Vorbeugung gegen einen Missbrauch bei der sogenannten Initialisierung empfohlen, einen in einem Zufallsgenerator erzeugten Schutzcode in einen Speicher auf dem Dokument einzuschreiben und gleichzeitig auf einem getrennten Beleg zu buchen, der unter Geheimhaltungsbedingungen in einen anschliessend zu versiegelnden Umschlag eingeführt wird. Das abzusichernde Dokument und der den Beleg enthaltende Umschlag werden getrennt zu dem ausgebenden Institut gebracht und dort getrennt gelagert und verwaltet, um erst bei der Personalisierung und Ausgabe des Dokuments zusammengeführt zu werden, wobei dann der von dem Beleg abgelesene Schutzcode mit dem in dem Speicher des Dokuments eingespeicherten Schutzcode verglichen wird. Die Erstellung und Handhabung eines zusätzlichen, getrennten Beleges führt aber zu einem erheblichen Mehraufwand. Ausserdem ist nicht auszuschliessen, dass die für die Fertigung der integrierten Schaltungen erforderlichen Unterlagen oder sogar Werkzeuge in falsche Hände fallen und z.B. verbrecherischen Organisationen die Fabrikation der integrierten Schaltung und der gesicherten Dokumente ermöglichen. Das gilt umsomehr, als Funktion und Aufbau der integrierten Schaltung bisher als nicht geheimhaltungsbedürftig angesehen wurden und später bei dem grossen Kreis der Personen, die sich mit der Fabrikation dieser Dinge befassen müssen, auch nicht geheimzuhalten sind.

Des weiteren ist es bekannt (FR-A-2 417 141), in einem PROM- oder REPROM-Speicher eines zu sichernden Dokuments Personalisierungsdaten und einen Schlüssel einzuspeichern, mit dem die Daten mittels eines in das Dokument integrierten Mikroprozessors verschlüsselt werden. Bei der Kontrolle stellt das Kontrollgerät an den Benutzer des Dokuments Fragen, die auf einem Bildschirm sichtbar gemacht werden. Der Benutzer gibt über eine Tastatur Antworten ein. Die aus dem Dokument ausgelesenen verschlüsselten Personalisierungsdaten werden im Kontrollgerät mit dem gleichen wie dem zum Verschlüsseln benutzten Schlüssel entschlüsselt und mit den vom Benutzer eingetasteten Antworten verglichen. Dieses Kontrollverfahren ist umständlich. Ausserdem lässt die Sicherheit zu wünschen übrig, weil sich der einzige verwendete Schlüssel aus dem Kontrollgerät ableiten lässt, das in der Regel an vielen Stellen vorhanden sein muss und daher einem räuberischen Zugriff offen ist.

Es ist ferner bekannt (Conference Record 1978 National Telecommunications Conference, Vol. 2, S. 26.4.2–26.4.4), zur Sicherung des Informationsaustauschs zwischen Geldausgabeautomaten und einem Bankzentralcomputer mittels des Zentralcomputers ein aus Chiffrierschlüssel und Dechiffrierschlüssel bestehendes «trap-door» Schlüsselpaar zu erzeugen, wobei der Dechiffrierschlüssel im Zentralcomputer geheim aufbewahrt wird, während der Chiffrierschlüssel an alle Geldausgabeautomaten geht. Soll über einen der Geldausgabeautomaten eine Geschäftstransaktion abgewickelt werden, erzeugt der betreffende Geldausgabeautomat eine nur für diese Transaktion bestimmte Zufallszahl R. Der Geldausgabeautomat speichert die Zufallszahl R ein und verschlüsselt die Nachricht «This is ATM x the current transaction number is R» unter Verwendung des Chiffrierschlüssels.

Die dabei erhaltene verschlüsselte Nachricht geht an den Zentralcomputer. Der Zentralcomputer entschlüsselt die chiffrierte Nachricht unter Benutzung des geheimgehaltenen Dechiffrierschlüssels und speichert die Zufallszahl R ein. Diese Zufallszahl wird dann in herkömmlicher Weise benutzt, um für die jeweilige Transaktion den gesamten Nachrichtenaustausch zwischen dem Computer und dem betreffenden Geldausgabeautomaten zu verschlüsseln, bis eine neue Transaktion beginnt. Dabei geht es nicht um die Erstellung von gesicherten Dokumenten. Zusätzlich zu dem «trap-door» Schlüsselpaar wird die Zufallszahl als Schlüssel bei der Verschlüsselung und Entschlüsselung benutzt.

Der Erfindung liegt die Aufgabe zugrunde, das eingangs genannte Verfahren derart weiterzubilden, dass auch einem Missbrauch durch Diebstahl oder Nachahmung von echten geschützten Dokumenten bzw. den dazugehörigen integrierten Schaltungen wirkungsvoll vorgebeugt ist. Es sollen geschützte Dokumente, z. B. Identifikationskarten, deren Fabrikation an sich abgeschlossen ist, für einen potentiellen Missbrauch dadurch unbrauchbar gemacht werden, dass vor dem Personalisierungsvorgang, also vor der Eintragung der den späteren rechtmässigen Inhaber betreffenden Daten und damit vor der Anwendung der Karte, ein Authentisierungsvorgang eingeschaltet wird, der zweckmässig an einer zentralen Stelle der für die Ausgabe der Dokumente verantwortlichen Organisation geschieht und durch den erst die Dokumente für die Personalisierung und die spätere Benutzung brauchbar werden.

Ausgehend von dem eingangs genannten Verfahren wird diese Aufgabe erfindungsgemäss dadurch gelöst, dass bei der Erstellung des Dokuments die unverschlüsselte Klarinformation in einem von aussen zugänglichen oder nicht zugänglichen Speicher des Dokuments sowie die verschlüsselte Information in einem von aussen nicht zugänglichen Speicher des Dokuments eingespeichert werden, sowie dass bei der Kontrolle des Dokuments auf einen externen Startbefehl hin die Entschlüsselung der verschlüsselten Information und der Vergleich der so gewonnenen Information mit der auf dem Dokument eingespeicherten unverschlüsselten Information in auf dem Dokument selbst vorgesehenen Schaltungsstufen durchgeführt werden und das Vergleichsergebnis nach aussen kenntlich gemacht wird.

Ein solches Vorgehen ermöglicht es, dass von einer Fabrikationsstätte in quasi ungesicherten Transporten die Zentralen von z.B. grösseren Kreditorganisationen mit derart geschützten Dokumenten, beispielsweise Identifikationskarten, beliefert werden können, und dass erst durch die in der Zentrale der Kreditorganisationen durchgeführte Authentisation die Dokumente «wertvoll» werden. Gegebenenfalls kann dabei der Vorgang der Authentisation mit dem Vorgang der Personalisierung zusammengefasst werden. Auch lässt sich die Authentisierung so gestalten, dass sie zugleich ein Kennzeichen der für die Ausgabe der Dokumente verantwortlichen Organisation ist, das bei späterer Verwendung erkannt werden kann.

Unter dem Begriff «Dokument» sollen vorliegend beliebige schutzbedürftige Objekte verstanden werden.

Ein zur Durchführung des Verfahrens geeignetes Dokument ist erfindungsgemäss dadurch gekennzeichnet, dass es mit einem integrierten Schaltkreis versehen ist, der einen von aussen zugänglichen oder nicht zugänglichen Klartextspeicher zum Einspeichern der unverschlüsselten Klarinformation, einen gegen Herauslesen von aussen gesicherten Chiffriertextspeicher zum Einspeichern der unter Verwendung des auf einer «trap-door» Funktion beruhenden geheimhaltungsbedürftigen Algorithmus bzw. des diesem zugeordneten geheimhaltungsbedürftigen Schlüssels verschlüsselten Information, einen an den Chiffriertextspeicher angeschlossenen Dechiffrierrechner zum Entschlüsseln der verschlüsselten Information anhand des nichtgeheimhaltungsbedürftigen Schlüssels des für die Kontrolle zu verwendenden Algorithmus und einen mit dem Dechiffrierrechner und dem Klartextspeicher verbundenen Vergleicher zum Vergleichen der unverschlüsselten und der entschlüsselten Information aufweist.

Die zum Erzeugen von solchen abgesicherten Dokumenten vorgesehene Vorrichtung weist einen Schlüsselgenerator zur Abgabe des geheimhaltungsbedürftigen Schlüssels, einen die unverschlüsselte Klarinformation anliefernden und bei der Erstellung des abgesicherten Dokuments mit dem Klartextspeicher des Dokuments verbindbaren Klartextgenerator und einen an den Schlüsselgenerator und den Klartextgenerator angeschlossenen, der Bildung der verschlüsselten Information dienenden Chiffrierrechner auf, dessen Ausgang bei der Erstellung des Dokuments mit dem Chiffriertextspeicher des Dokuments verbindbar ist. Die Kontrollvorrichtung ist erfindungsgemäss mit einer für die Kontrolle an den Ausgang des Vergleichers anschliessbaren Steuerung zum Auswerten des Vergleichsergebnisses ausgestattet.

Weitere Merkmale der Erfindung ergeben sich aus den Unteransprüchen.

Die Erfindung ist im folgenden anhand von bevorzugten Ausführungsbeispielen näher erläutert. In den beiliegenden Zeichnungen zeigen:

Fig. 1 eine Einrichtung zur Absicherung (Authentisation) von Dokumenten,

Fig. 2 eine Einrichtung zur Kontrolle abgesicherter Dokumente,

Fig. 3 eine Einrichtung zur Absicherung von Dokumenten mit konstantem Schlüssel, und

Fig. 4 eine Einrichtung zur Kontrolle abgesicherter Dokumente mit konstantem Schlüssel.

Vorliegend wird davon ausgegangen, dass auf dem abzusichernden Dokument eine Information im Klartext K und in chiffrierter Form C eingetragen wird, wobei diese beiden Informationen durch das Gleichungspaar

$$(1) \quad C = B (K)$$
$$(2) \quad K = A (C)$$

zusammenhängen, sowie dass der zur Chiffrierung verwendete Algorithmus oder der dazugehörige Schlüssel B sich nicht oder jedenfalls nicht mit sinnvollem Aufwand und innerhalb einer sinnvollen Zeitspanne aus dem zur Dechiffrierung verwendeten Schlüssel A ableiten lässt.

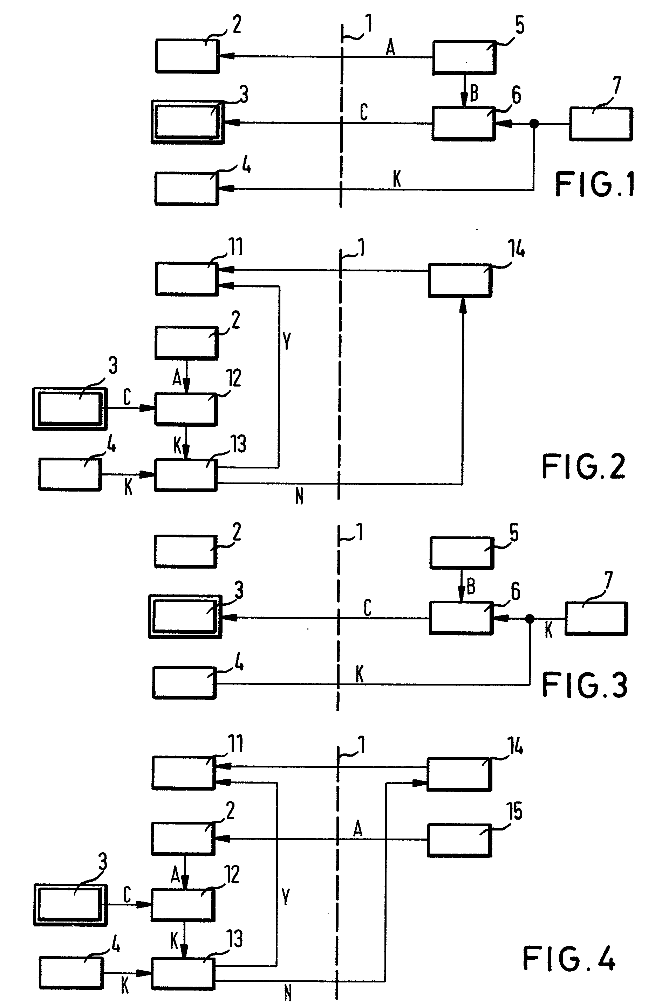

Die Beschreibung der Erfindung erfolgt zunächst in einer beispielhaften Ausführung anhand der schematischen Fig. 1 und 2. In diesen Figuren sind ebenso wie in den übrigen Figuren die Einrichtungen der integrierten Schaltung (Chip) des zu schützenden Gegenstandes, z. B. der Identifikationskarte, links und die Einrichtungen ausserhalb der Identifikationskarte rechts von einer gestrichelten Linie 1 dargestellt. Die integrierte Schaltung der Identifikationskarte enthält, wie insbesondere aus Fig. 2 hervorgeht, einen Schlüsselspeicher 2 und einen Klartextspeicher 4. Beide Speicher sind Festwertspeicher, die bei der Authentisation beschrieben werden und keine besondere Sicherung gegen das Herauslesen der Information durch Einrichtungen ausserhalb der Karte besitzen müssen. Es ist ferner ein Chiffriertextspeicher 3 vorgesehen, der ebenfalls während der Authentisation beschrieben wird, aber gegen das Herauslesen gesichert ist. Das heisst, der Speicher 3 gibt seine Information nur an Einrichtungen auf der integrierten Schaltung des Dokuments ab. Weiterhin gehören zu der integrierten Schaltung des Dokuments ein Dechiffrierrechner 12 und ein Vergleicher 13. Über die in den Figuren eingetragenen Bestandteile hinaus besitzt die integrierte Schaltung je nach der gestellten Aufgabe Transaktionsspeicher, Speicher für Personalisierungsdaten, Speicher für Limite, Zeitbegrenzungen und die hierfür erforderlichen Einrichtungen zur Datenverarbeitung, wie sie dem Stand der Technik entsprechen. Diese Einrichtungen sind hier nicht dargestellt, da sie zur Erläuterung der Erfindung nicht beitragen.

Der vorzugsweise monolitische integrierte Schaltkreis des Dokuments besitzt ausserdem eine Programmsteuerung 11, die alle Abläufe auf dem integrierten Schaltkreis steuert und bis auf wenige Eingriffsmöglichkeiten autonom ist. Die Funktion der Programmsteuerung 11 während der Authentisation nach Fig. 1 und der Kontrolle nach Fig. 2 ergibt sich aus den zu beschreibenden Funktionsabläufen und ist daher nicht im Detail erläutert. Aus diesem Grunde ist auch die Programmsteuerung wie die übrigen Datenverarbeitungseinrichtungen in Fig. 1 weggelassen.

In Fig. 1 ist auf der rechten Seite der gestrichelten Linie 1 die Authentisationseinrichtung schematisch dargestellt. Ein Schlüsselgenerator 5 erzeugt ein Schlüsselpaar A und B, das die oben geschilderte Eigenschaft besitzt, d.h. sich im wesentlichen dadurch auszeichnet, dass der Schlüssel B nicht aus dem Schlüssel A abgeleitet werden kann.

Der Schlüssel A wird in die Identifikationskarte übertragen und dort im Schlüsselspeicher 2 irreversibel gespeichert. Der Schlüssel B wird einem Chiffrierrechner 6 zugeführt. Er ist in seiner Funktion, d.h. in dem von ihm benutzten Algorithmus, nicht unbedingt geheimzuhalten. Er kann bekannte, ja sogar genormte Chiffrieralgorithmen durchführen.

Dem Chiffrierrechner 6 wird weiterhin ein Klartext K aus einem Klartextgenerator 7 zugeführt. Dieser Klartext K kann fest oder variabel sein. Mögliche Bedeutungen sind z. B. das Kennzeichen der Kreditorganisation, der Zeitpunkt der Authentisation, eine laufende Kartennummer, eine Zufallszahl oder dergleichen. Je nach Aufgabenstellung ist der Klartextgenerator 7 z. B. ein Festwertspeicher, eine elektronische Uhr oder ein Zahlengenerator.

Der Klartext K wird ohne Veränderung in die Identifikationskarte übertragen und dort im Klartextspeicher 4 gespeichert. Ausserdem wird er mit Hilfe des Schlüssels B im Chiffrierrechner 6 verschlüsselt. Das Ergebnis C wird in die Identifikationskarte übertragen und dort in den geschützten Chiffriertextspeicher 3 eingespeichert.

Der Authentisationsvorgang wird von einer nicht eingezeichneten Programmsteuerung der Authentisationseinrichtung im Zusammenwirken mit der Programmsteuerung 11 der integrierten Schaltung gesteuert. Der Aufbau dieser Programmsteuerungen ist aus der beschriebenen Funktion für den Fachmann leicht abzuleiten.

Die Authentisation findet in einer geschützten Umgebung statt, damit der Schlüssel B wirksam geheimgehalten werden kann. Es erscheint daher zweckmässig, dass jeder Ausgeber von Identifikationskarten nur eine zentrale Einrichtung zur Authentisation besitzt. Bei dem in den Einrichtungen nach Fig. 1 und 2 benutzten Verfahren kann für jede Karte ein neues Schlüsselpaar A, B erzeugt werden und der Schlüssel B sofort nach seiner Benutzung im Chiffrierrechner 6 aus allen Speichern gelöscht werden, da er nicht mehr benötigt wird.

Zur Erhöhung der Sicherheit können wesentliche Teile der Authentisationseinrichtung, insbesondere Schlüsselgenerator 5 und Chiffrierrechner 6, auf einer gemeinsamen integrierten Schaltung vereinigt werden, die einen Zugriff zum Schlüssel B wirksam verhindert.

In Fig. 2 ist auf der rechten Seite die Kontrolleinrichtung schematisch in einer Ausführungsform dargestellt, mit der die Identifikationskarte auf ihre Echtheit geprüft werden kann. Der einzige für die Erläuterung der Erfindung wesentliche Teil der Kontrolleinrichtung ist eine Steuerung 14, mit der die Vorgänge in der Kontrolleinrichtung gesteuert werden und die mit der Programmsteuerung 11 der integrierten Schaltung in Verbindung steht.

Der Kontrollvorgang spielt sich nach Fig. 2 wie folgt ab: Nach dem Einschieben der Identifikationskarte in die Kontrolleinrichtung wird die Steuerung 14 aktiviert; sie gibt ein Startkommando an die Programmsteuerung 11. Die Programmsteuerung 11 veranlasst nun, dass der zur Dechiffrierung notwendige Schlüssel A aus dem Speicher 2 in den Dechiffrierrechner 12 übertragen wird.

Im zweiten Arbeitsschritt wird aus dem gesicherten Chiffriertextspeicher 3 die chiffrierte Information C dem Dechiffrierrechner 12 zugeführt, der seinerseits die durch Dechiffrierung erzeugte Klartextinformation K an den Vergleicher 13 abgibt. Gleichzeitig veranlasst die Programmsteuerung 11 die Übergabe des Inhaltes des Klartextspeichers 4 an den Vergleicher 13.

Der Vergleicher 13 gibt bei Übereinstimmung der beiden Informationen ein Signal Y an die Programmsteuerung 11, durch welche die nunmehr folgenden Vorgänge wie z.B. die Durchführung von finanziellen Transaktionen freigegeben werden.

Im Falle der Nichtübereinstimmung gibt der Vergleicher 13 über eine Verbindung den Befehl N an die Steuerung 14 des Kontrollgerätes und veranlasst auf diese Weise z.B. das Einbehalten der Karte, die sich als Fälschung herausgestellt hat.

Die Sicherheit des Verfahrens beruht auf der Tatsache, dass ein Fälscher nicht in der Lage ist, das Informationspaar C/K herzustellen und es in eine fabrikneue Karte einzuspeichern, weil hierzu der geheimgehaltene Schlüssel B erforderlich ist. Karten ohne ein Informationspaar C/K, das mit Hilfe des Schlüssels A verglichen werden kann, gelten aber als nicht echt.

Das geschilderte Verfahren besitzt aber noch eine Angriffsmöglichkeit.

Unter der Voraussetzung, dass der Fälscher den Aufbau der integrierten Schaltung exakt kennt und in der Lage ist, sich eine Authentisationseinrichtung selbst aufzubauen, kann er unter Ausnutzung seiner Kenntnisse über die Funktion des Dechiffrierrechners 12 ein Wertetripel CKA so auswählen, dass der Vergleich im Vergleicher 13 positiv wird. Mit solchen Wertetripeln könnte er fabrikneue gestohlene Karten mit einer Authentisation versehen, die in dem anhand der Fig. 2 geschilderten Kontrollvorgang nicht als falsch erkannt wird. Gegen einen solchen Angriff würde es auch nichts helfen, wenn man nicht nur den Chiffriertext C in einem gesicherten Speicher sondern darüber hinaus auch den Klartext K und z.B. den Schlüssel A in einem gesicherten Speicher unterbringen würde. Auch in diesem Fall wäre es dem Fälscher möglich, mit Hilfe selbstausgearbeiteter Informationstripel CKA fabrikneue Karten mit einer nicht erkennbaren falschen Authentisation zu versehen.

Anhand den Fig. 3 und 4 sollen Einrichtungen beschrieben werden, die auch vor diesem unwahrscheinlichen Angriffsfall wirksam schützen. Der Authentisationsvorgang wird anhand der in Fig. 3 dargestellten Einrichtung, der Kontrollvorgang anhand der in Fig. 4 dargestellten Einrichtung erläutert.

Der Unterschied gegenüber den vorangegangenen Figuren besteht vor allem darin, dass zwischen dem Schlüsselgenerator 5 im Authentisationsgerät und dem Schlüsselspeicher 2 keine Verbindung besteht, dafür aber das Kontrollgerät einen Schlüsselgenerator 15 besitzt, der eine Verbindung zum Schlüsselspeicher 2 hat. Im Gegensatz zu dem oben geschilderten Verfahren wird bei dem Verfahren nach Fig. 3 und 4 mit einem von der Karten ausgebenden Organisation einmal festgelegten unveränderlichen Schlüsselpaar A und B gearbeitet. Der Schlüsselgenerator 5 der Authentisationseinrichtung ist also ein Festwertspeicher, der nur den Schlüssel B abgeben muss. In allen Kontrolleinrichtungen ist ein Schlüsselgenerator 15 vorgesehen, der im einfachen Fall ein Festwertspeicher für den Schlüssel A ist. Er kann aber auch mehrere Schlüssel A umschaltbar enthalten, die verschiedenen Karten ausgebenden Organisationen mit zugehörigen unterschiedlichen Schlüsseln B entsprechen. Statt einer Umschaltung des Festwertspeichers kann auch eine Anzahl verschiedener Schlüsselkarten verwendet werden, die den verschiedenen Karten ausgebenden Organisationen entsprechen. Diese Schlüsselkarten werden zweckmässig ähnlich wie die Teilnehmerkarte mit integrierten Schaltungen zur Speicherung des jeweiligen Schlüssels A ausgestattet.

Der Vorgang der Authentisation verläuft im wesentlichen wie oben beschrieben. Wiederum kann der Klartextgenerator 7 die verschiedenen Formen annehmen. Der Schlüsselspeicher 2 auf der integrierten Schaltung wird während der Authentisation nicht beschrieben. Er ist auch kein Festwertspeicher, sondern ein Speicher, der gelöscht werden kann oder sich selbst löscht.

Bei der Kontrolle nach Fig. 4 läuft ebenfalls der oben beschriebene Vorgang im wesentlichen unverändert ab. Es wird lediglich zunächst der Schlüssel A in den Schlüsselspeicher 2 übertragen, so dass er für die Dechiffrierung zur Verfügung steht.

Der Unterschied des anhand der Fig. 3 und 4 beschriebenen Verfahrens gegenüber der zuerst erläuterten Ausführungsform besteht im wesentlichen darin, dass mit einer festen, für eine Karten ausgebende Organisation einmal festgelegten Verschlüsselung gearbeitet wird. Hierdurch ist es einem Fälscher nicht möglich, ohne den Schlüssel B zu kennen, ein Informationstripel KCA herzustellen, mit dem er gestohlene neue Karten mit einer falschen Authentisation versehen könnte. Ihm ist zwar der Schlüssel A bekannt, nicht dagegen der Schlüssel B, und ohne diesen Schlüssel B ist es unmöglich, ein Informationspaar K/C zu erzeugen, das bei der Dechiffrierung mit dem Schlüssel A und nachfolgendem Vergleich zu einem positiven Resultat führen würde.

Zwischen den beiden beschriebenen Ausführungsformen des Verfahrens liegt eine Variante, die darin besteht, dass nicht mit einem einzigen Schlüsselpaar A/B gearbeitet wird, sondern mit mehreren numerierten Schlüsselpaaren. Bei der Authentisation wird die jeweilige Nummer des Schlüsselpaares auf der Karte vermerkt. Bei der Kontrolle wird zunächst diese Nummer vom Kontrollgerät aus der Karte herausgelesen und danach im Kontrollgerät der zugehörige Schlüssel A gewählt. Der Schlüsselgenerator 15 enthält in diesem Falle nicht einen Schlüssel A sondern eine Anzahl durchnumerierter Schlüssel.

Die beschriebene Kartensicherung ist nicht auf die geschilderte Anwendung beschränkt. Es ist z.B. vorgeschlagen worden, in sogenannten POS-Terminals eine Karte mit integriertem Kreis vorzusehen, die dem Händler zugeordnet ist und auf der seine Einnahmen registriert werden. Auch diese Karte kann in der geschilderten Form geschützt werden. Darüber hinaus bietet sich ein weites Feld der Anwendung auch für Zugangskontrollsysteme und dergleichen an.

Die beschriebene Erfindung erlaubt es erstmalig, eine in der Fabrikation völlig uniforme Identifikationskarte oder dergleichen mit einem integrierten Schaltkreis durch die für die Kartenausgabe verantwortliche Organisation so zu authentisieren, dass nachträglich in Kontrollgeräten unter Ausschluss jeder Betrugsmöglichkeit die Identifikationskarte als echt erkannt wird und die für die Kartenausgabe verantwortliche Organisation eindeutig identifiziert werden kann.

Die beschriebenen Verfahrensweisen und Einrichtungen lassen sich in der Richtung erweitern, dass auch Teile der zur Personalisierung eingetragenen Information wie z.B. die PIN in die Verschlüsselung mitaufgenommen werden. Da hierdurch aber der Schutz dieser Informationen nicht wesentlich verbessert wird, soll auf eine Detaildarstellung verzichtet werden.

**Patentansprüche**

1. Verfahren zur Erzeugung und späteren Kontrolle von gegen Nachahmung, Verfälschung und Missbrauch abgesicherten Dokumenten unter Verwendung eines über eine «trap-door» Funktion verbundenen Schlüssel- oder Algorithmuspaares bestehend aus einem geheimhaltungsbedürftigen Schlüssel (B) und einem nichtgeheimhaltungsbedürftigen Schlüssel (A), bei dem auf dem abzusichernden Dokument bei dessen Erstellung eine unverschlüsselte Klarinformation (K) eingetragen wird, aus der unverschlüsselten Klarinformation unter Verwendung des geheimgehaltenen Schlüssels oder Algorithmus (B) eine verschlüsselte Information (C) abgeleitet wird, die ebenfalls auf dem abzusichernden Dokument eingetragen wird, und bei dem bei der Kontrolle des Dokuments die verschlüsselte Information (C) unter Verwendung des nichtgeheimhaltungsbedürftigen Schlüssels bzw. Algorithmus (A) entschlüsselt, die so gewonnene Information (K) mit der auf dem Dokument befindlichen unverschlüsselten Information (K) verglichen und anhand des Vergleichersergebnisses die Gültigkeit des Dokuments kenntlich gemacht wird, dadurch gekennzeichnet, dass bei der Erstellung des Dokuments die unverschlüsselte Klarinformation (K) in einem von aussen zugänglichen oder nicht zugänglichen Speicher (4) des Dokuments sowie die verschlüsselte Information (C) in einem von aussen nicht zugänglichen Speicher (3) des Dokuments eingespeichert werden, sowie dass bei der Kontrolle des Dokuments auf einen externen Startbefehl hin die Entschlüsselung der verschlüsselten Information (C) und der Vergleich der so gewonnenen Information (K) mit der auf dem Dokument eingespeicherten unverschlüsselten Information (K) in auf dem Dokument selbst vorgesehenen Schaltungsstufen (12, 13) durchgeführt werden und das Vergleichsergebnis nach aussen kenntlich gemacht wird.

2. Verfahren nach Anspruch 1, dadurch gekennzeichnet, dass bei der Erstellung des Dokuments der nichtgeheimhaltungsbedürftige Schlüssel (A) des für die Kontrolle des Dokuments zu verwendenden Algorithmus in einem von aussen zugänglichen oder nicht zugänglichen Speicher (2) des Dokuments eingespeichert wird.

3. Verfahren nach Anspruch 1, dadurch gekennzeichnet, dass ein oder mehrere vorbestimmte Schlüsselpaare ($A_i$, $B_i$) vorgesehen werden und dass der nichtgeheimhaltungsbedürftige Schlüssel ($A_i$) des für die Kontrolle des Dokuments zu verwendenden Algorithmus erst bei der Kontrolle auf das Dokument übertragen wird.

4. Verfahren nach Anspruch 3, dadurch gekennzeichnet, dass bei Verwendung mehrerer vorbestimmter Schlüsselpaare ($A_i$, $B_i$) jedem Schlüsselpaar eine Kennung zugeordnet wird, die bei der Erstellung des abgesicherten Dokuments auf dem Dokument vermerkt und bei der Kontrolle aus dem Dokument zwecks Auswahl des auf das Dokument zu übertragenden nichtgeheimhaltungsbedürftigen Schlüssels ($A_i$) ausgelesen wird.

5. Dokument zur Durchführung des Verfahrens nach einem der vorhergehenden Ansprüche, dadurch gekennzeichnet, dass das Dokument mit einem integrierten Schaltkreis versehen ist, der einen von aussen zugänglichen oder nicht zugänglichen Klartextspeicher (4) zum Einspeichern der unverschlüsselten Klarinformation (K), einen gegen Herauslesen von aussen gesicherten Chiffriertextspeicher (3) zum Einspeichern der unter Verwendung des auf einer «trap-door» Funktion beruhenden geheimhaltungsbedürftigen Algorithmus bzw. des diesem zugeordneten geheimhaltungsbedürftigen Schlüssels (B) verschlüsselten Information (C), einen an den Chiffriertextspeicher (3) angeschlossenen Dechiffrierrechner (12) zum Entschlüsseln der verschlüsselten Information (C) anhand des nichtgeheimhaltungsbedürftigen Schlüssels (A) des für die Kontrolle zu verwendenden Algorithmus und einen mit dem Dechiffrierrechner (12) und dem Klartextspeicher (4) verbundenen Vergleicher (13) zum Vergleichen der unverschlüsselten und der entschlüsselten Information aufweist.

6. Dokument nach Anspruch 5, dadurch gekennzeichnet, dass der integrierte Schaltkreis zusätzlich einen mit einem Eingang des Dechiffrierrechners (12) verbundenen Schlüsselspeicher (2) zum Einspeichern des nichtgeheimhaltungsbedürftigen Schlüssels (A) des für die Kontrolle zu verwendenden Algorithmus aufweist.

7. Dokument nach Anspruch 6, dadurch gekennzeichnet, dass der Schlüsselspeicher (2) als löschbarer oder sich selbst löschender Speicher ausgebildet ist.

8. Dokument nach einem der Ansprüche 5 bis 7, dadurch gekennzeichnet, dass der integrierte Schaltkreis mit einer Programmsteuerung (11) zum Steuern der Arbeitsabläufe des integrierten Schaltkreises versehen ist.

9. Dokument nach einem der Ansprüche 5 bis 8, dadurch gekennzeichnet, dass der integrierte Schaltkreis monolitisch ausgebildet ist.

10. Vorrichtung zum Erzeugen von abgesicherten Dokumenten entsprechend dem Verfahren nach einem der Ansprüche 1 bis 4 unter Verwendung eines Dokuments nach einem der Ansprüche 5 bis 9, gekennzeichnet durch einen Schlüsselgenerator (5) zur Abgabe geheimhaltungsbedürftigen Schlüssels (B), einen die unverschlüsselte Klarinformation (K) anliefernden und bei der Erstellung des abgesicherten Dokuments mit dem Klartextspeicher (4) des Dokuments verbindbaren Klartextgenerator (7) und einen an den Schlüsselgenerator (5) und den Klartextgenerator (7) angeschlossenen, der Bildung der verschlüsselten Information (C) dienenden Chiffrierrechner (6), dessen Ausgang bei der Erstellung des Dokuments mit dem Chiffriertextspeicher (3) des Dokuments verbindbar ist.

11. Vorrichtung nach Anspruch 10, dadurch gekennzeichnet, dass mittels des Schlüsselgenerators (5) Schlüsselpaare ($A_i$, $B_i$) erzeugbar sind und der Ausgang des Schlüsselgenerators für den nichtgeheimhaltungsbedürften Schlüssel ($A_i$) des für die Kontrolle des Dokuments zu verwendenden Algorithmus bei der Erstellung des abgesicherten Dokuments an den Schlüsselspeicher (2) anschliessbar ist.

12. Vorrichtung nach Anspruch 10 oder 11, dadurch gekennzeichnet, dass der Schlüsselgenerator (5) und der Chiffrierrechner (6) zu einer einen Zugriff zu dem geheimhaltungsbedürftigen Schlüssel (B) verhindernden integrierten Schaltung vereinigt sind.

13. Vorrichtung zum Kontrollieren von Dokumenten entsprechend dem Verfahren nach einem der Ansprüche 1 bis 4 unter Verwendung eines Dokuments nach einem der Ansprüche 5 bis 9, gekennzeichnet durch eine für die Kontrolle an den Ausgang des Vergleichers (13) anschliessbare Steuerung (14) zum Auswerten des Vergleichsergebnisses.

14. Vorrichtung nach Anspruch 13, dadurch gekennzeichnet, dass die Steuerung (14) für den Kontrollvorgang zwecks Übermittlung des externen Startbefehls an die Programmsteuerung (11) anschliessbar ist.

15. Vorrichtung nach Anspruch 13 oder 14, gekennzeichnet durch einen Schlüsselgenerator (15) zum Übermitteln des nichtgeheimhaltungsbedürftigen Schlüssels (A) des vom Dechiffrierrechner (12) für die Kontrolle zu verwendenden Algorithmus.

## Claims

1. A method of producing and later checking documents which are to be protected from counterfeiting, falsification and misuse using a pair of codes or algorithms which are connected via a «trap-door» function and consist of a code (B) which has to be kept secret and a code (A) which does not have to be kept secret, wherein uncoded information in clear (K) is entered on the document to be protected during its preparation, coded information (C) is derived from the uncoded information in clear, using the code or algorithm (B) which is kept secret and is likewise entered on the document to be protected, and wherein, during the checking of the document, the coded information (C) is decoded using the code or algorithm (A) which does not have to be kept secret, the information (K) thus obtained is compared with the uncoded information (K) present on the document and the validity of the document is made evident with reference to the result of the comparison characterised in that, during the preparation of the document, the uncoded information in clear (K) is stored in a store (4) of the document which is accessible or not accessible from the outside and the coded information (C) is stored in a store (3) of the document which is not accessible from the outside, and that during the checking of the document, following an external start instruction, the decoding of the coded information (C) and the comparison of the information (K) thus obtained with the uncoded information (K) stored on the document are carried out in circuit stages (12, 13) provided on the document itself and the result of the comparison is made evident to the outside.

2. A method as claimed in Claim 1, characterised in that, during the preparation of the document, the code (A), which does not have to be kept secret, of the algorithm to be used for the checking of the document is stored in a store (2) of the document which is accessible or not accessible from the outside.

3. A method as claimed in Claim 1, characterised in that one or more predetermined pairs of codes ($A_i$, $B_i$) are provided and that the code ($A_i$), which does not have to be kept secret, of the algorithm to be used for the checking of the document is only transferred to the document during the checking.

4. A method as claimed in Claim 3, characterised in that, when a plurality of predetermined pairs of codes ($A_i$, $B_i$) are used, an identification means is allocated to each pair of codes, which identification means is noted on the document during the preparation of the protected document and is read out of the document during the checking for the purpose of selecting the code ($A_i$) which does not need to be kept secret which is to be transferred to the document.

5. A document for carrying out the method as claimed in one of the preceding Claims, characterised in that the document is provided with an integrated switching circuit which comprises a clear-text store (4), which is accessible or not accessible from the outside, for storing the uncoded information in clear (K), a cipher-text store (3), which is secured against reading out from the outside, for storing the information (C) coded using the algorithm which has to be kept secret and which is based on a «trap-door» function, or the code (B) which has to be kept secret and which is associated with this algorithm, a deciphering computer (12) which is connected to the cipher-text store (3) for the decoding of the coded information (C) with the aid of the code (A), which does not have to be kept secret, of the algorithm to be used for the checking and a comparator (13), which is connected to the deciphering computer (12) and the clear-text store (4) for the comparison of the uncoded and the coded information.

6. A document as claimed in Claim 5, characterised in that the integrated switching circuit additionally comprises a code store (2), which is connected to an input of the deciphering computer (12) for storing the code (A), which does not have to be kept secret, of the algorithm to be used for the checking.

7. A document as claimed in Claim 6, characterised in that the code store (2) is constructed in the form of a store which can be cleared or a self-clearing store.

8. A document as claimed in one of the Claims 5 to 7, characterised in that the integrated switching circuit is provided with a program control (11) to control the working sequences of the integrated switching circuit.

9. A document as claimed in one of the Claims 5 to 8, characterised in that the integrated switching circuit is monolithic in construction.

10. An Apparatus for producing protected documents in accordance with the method as claimed in one of the Claims 1 to 4, using a document as claimed in one of the Claims 5 to 9, characterised by a code generator (5) to deliver a code (B) which has to be kept secret, a clear-text generator (7) which supplies the uncoded information in clear (K) and can be connected to the clear-text store (4) of the document during the preparation of the protected document, and a ciphering computer (6) which is connected to the code generator (5) and to the clear-text generator (7) and serves to form the coded information (C), and the output of which can be connected to the cipher-text store (3) of the document during the production of the document.

11. An apparatus as claimed in Claim 10, characterised in that pairs of codes ($A_i$, $B_i$) can be produced by means of the code generator (5) and the output code of the generator for the code ($A_i$), which does not have to be kept secret, of the algorithm to be used for the checking of the document can be connected to the code store (2) during the preparation of the protected document.

12. An apparatus as claimed in Claim 10 or 11, characterised in that the code generator (5) and the ciphering computer (6) are united to form an integrated circuit which prevents access to the code (B) which has to be kept secret.

13. An apparatus for checking documents according to the method as claimed in one of the Claims 1 to 4, using a document as claimed in one of the Claims 5 to 9, characterised by a control (14), which can be connected to the output of the comparator (13) for the checking, in order to evaluate the result of the comparison.

14. An apparatus as claimed in Claim 13, characterised in that the control (14) for the checking operation can be connected to the program control (11) for the purpose of transmitting the external start instruction.

15. An apparatus as claimed in Claim 13 or 14, characterised by a code generator (15) to transmit the code (A), which does not need to be kept secret, of the alogrithm to be used by the deciphering computer (12) for the checking.

**Revendications**

1. Procédé pour produire et pour contrôler ultérieurement des documents protégés contre les imitations, les falsifications et les utilisations abusives qui consiste à utiliser une paire de clés ou d'algorithmes liés par une fonction dite «trapdoor» ou «piège» qui comprend une clé devant être tenue secrète (B) et une clé qui n'a pas besoin d'être tenue secrète (A), dans lequel on inscrit, au moment où il est établi, sur le document devant être protégé une information en clair non codée (K) dont on se sert, en utilisant la clé ou l'algorithme tenu secret (B) pour déduire une information codée ou chiffrée (C) qui sera également inscrite sur le document devant être protégé et, dans lequel au moment du contrôle de l'authenticité du document, on décode l'information codée (C) en utilisant la clé ou l'algorithme qui n'a pas besoin d'être tenu secret (A) avant de comparer l'information ainsi obtenue (C) avec l'information non-codée (K) inscrite sur le document, le résultat de cette comparaison constituant le critère de validité dudit document, caractérisé en ce que, en établissant le document, on inscrit l'information en clair non-codée (K) dans une mémoire (4) du document qui est accessible ou inaccessible de l'extérieur et on inscrit l'information codée (C) dans une mémoire (3) du document inaccessible de l'extérieur, et en ce que, au moment du contrôle de l'authenticité du document, suite à un ordre de départ externe, le décodage de l'information codée (C) ainsi obtenue et la comparaison avec l'information non-codée (K) inscrite sur le document sont réalisés par des circuits (12, 13) prévus sur le document lui-même, le résultat de cette comparaison étant divulgué à l'extérieur.

2. Procédé selon la revendication 1, caractérisé en ce que, au moment de l'établissement du document, on inscrit la clé qui n'a pas besoin d'être tenue secrète (A) de l'algorithme devant être utilisé pour le contrôle du document dans une mémoire (2) du document qui est accessible ou inaccessible de l'extérieur.

3. Procédé selon la revendication 1, caractérisé en ce qu'on prévoit une ou plusieurs paires de clés ($A_i$, $B_i$) et en ce que la clé n'ayant pas besoin d'être tenue secrète ($A_i$) de l'algorithme utilisé pour le contrôle du document n'est transmise qu'au moment du contrôle du document.

4. Procédé selon la revendication 3, caractérisé en ce que, en cas d'utilisation de plusieurs paires de clés prédéterminées ($A_i$, $B_i$), on affecte à chaque paire un indice que l'on inscrit sur le document protégé lors de l'établissement de celui-ci, et en ce que, au moment du contrôle du document, on lit celui-ci aux fins de sélection de la clé ne devant pas être tenue secrète ($A_i$) qui doit être transmise.

5. Document pour la mise en œuvre du procédé spécifié dans l'une quelconque des revendications précédentes, caractérisé en ce que le document est pourvu d'un circuit intégré qui comprend une mémoire (4) accessible ou inaccessible de l'extérieur pour conserver l'information en clair non-codée (K), une mémoire (3) protégée ou garantie contre une lecture de l'extérieur de son contenu pour conserver l'information codée (C) en utilisant l'algorithme devant être tenu secret fondé sur une fonction «trap-door» ou «piégée» ou la clé devant être tenue secrète (B) correspondante, un calculateur de décodage (12) connecté à la mémoire (3) contenant le texte codé pour décoder l'information codée (C) au moyen de la clé n'ayant pas besoin d'être tenue secrète (A) de l'algorithme utilisé, et un comparateur (13) relié à la mémoire (4) contenant le texte en clair et au calculateur de décodage (12) pour comparer les informations non codées et codées.

6. Document selon la revendication 5, caractérisé en ce que le circuit intégré comporte, en outre, une mémoire (2) connectée au calculateur de décodage (12) pour conserver la clé n'ayant pas besoin d'être tenue secrète (A) de l'algorithme utilisé pour le contrôle.

7. Document selon la revendication 6, caractérisé en ce que la mémoire à clé (2) est effaçable ou s'efface automatiquement.

8. Document selon l'une quelconque des revendications 5 à 7 caractérisé en ce que le circuit intégré comprend une commande de programme (11) régissant le déroulement des étapes opératoires de celui-ci.

9. Document selon l'une quelconque des revendications 5 à 8, caractérisé en ce que le circuit intégré est un circuit monolithique.

10. Dispositif pour produire des documents protégés selon le procédé spécifié dans l'une quelconque des revendications 1 à 4 en utilisant un document selon l'une quelconque des revendications 5 à 9, caractérisé en ce qu'il comprend un générateur (5) pour produire une clé devant être tenue secrète (B), un générateur (7) fournissant une information en clair non-codée (K) et qui, au moment de l'établissement du document protégé peut être connecté à la mémoire (4) contenant le texte en clair et un générateur (7) pouvant être connecté à la mémoire de texte en clair (4) du document, et un calculateur (6) servant à former l'information codée et qui est connecté au générateur de clé (5) et au générateur de texte en clair (7) dont la sortie peut être connectée à la mémoire de texte en clair (3) lors de l'établissement du document.

11. Dispositif selon la revendication 10, caractérisé en ce que, au moyen du générateur (5) peuvent être produites des paires de clés ($A_i$, $B_i$) et en ce que la sortie dudit générateur (5) à laquelle apparaît la clé n'ayant pas besoin d'être tenue secrète ($A_i$) de l'algorithme utilisé pour contrôler l'authenticité du document, peut, lors de l'établissement dudit document protégé, être connectée à la mémoire de clé (2).

12. Dispositif selon la revendication 10 ou 11, caractérisé en ce que le générateur de clé (5) et le calculateur de codage sont confondus dans un circuit intégré empêchant d'accéder à la clé devant être tenue secrète (B).

13. Dispositif pour contrôler des documents produits selon le procédé spécifié dans l'une quelconque des revendications 1 à 4 lors de l'utilisation d'un document selon l'une quelconque des revendications 5 à 9, caractérisé par un moyen de commande (14) pouvant être connecté à la sortie du comparateur (13) afin d'évaluer le résultat des comparaisons et, partant, contrôler l'authenticité des documents.

14. Dispositif selon la revendication 13, caractérisé en ce que, pour transmettre un ordre de départ externe le moyen de commande (14) peut être connecté à la commande de programme (11).

15. Dispositif selon la revendication 13 ou 14, caractérisé par un générateur (15) pour transmettre la clé qui n'a pas besoin d'être tenue secrète (A) de l'algorithme utilisé pour le contrôle par le calculateur de décodage.

FIG.1

FIG.2

FIG.3

FIG.4